# FASCICULE DE BREVET EUROPEEN

(11) **EP 2 120 612 B1**
(45) Date de publication et mention de la délivrance du brevet: **19.12.2018**
(21) Numéro de dépôt: 08761874.0
(22) Date de dépôt: 12.02.2008
(51) Int. Cl.: A23N 1/00

(54) **PRESSE-AGRUMES POUR LE PRESSAGE D'UN AGRUME ENTIER**
ZITRUSPRESSE ZUM AUSPRESSEN EINER GANZEN ZITRUSFRUCHT
CITRUS SQUEEZER FOR SQUEEZING A WHOLE CITRUS

(30) Priorité: 15.02.2007 FR 0701093
(43) Date de publication de la demande: 25.11.2009
(60) Demande divisionnaire: 18206076.4
(73) Titulaire: SEB S.A., 69130 Ecully (FR)
(72) Inventeur: LEBRUN, Erik, F-65420 Ibos (FR); TOMPA, Carole, Line, F-65000 Tarbes (FR); ROUCHES, Alexandre, F-65310 Horgues (FR); SAN VICENTE, Alain, F-65270 Peyrouse (FR)
(74) Mandataire: Rivière, Sophie
(86) Numéro de dépôt international: PCT/FR2008/000174
(87) Numéro de publication internationale: WO 2008/113920

(56) Documents cités:
- EP-A- 0 343 488
- EP-A- 1 016 348
- EP-A1- 1 016 348
- EP-A1- 1 016 348
- EP-A2- 0 343 488
- EP-A2- 0 343 488
- WO-A-2006/048850
- WO-A2-2006/048850
- WO-A2-2006/048850
- FR-A- 1 323 666
- FR-A- 1 323 666
- FR-A- 1 323 666
- GB-A- 2 249 037
- GB-A- 2 249 037
- GB-A- 2 249 037

## Description

La présente invention concerne le domaine technique des presse-agrumes.

La présente invention concerne notamment les appareils électroménagers mais aussi les appareils de type semi-professionnel, voire professionnel.

La présente invention concerne plus particulièrement les presse-agrumes automatiques ou semi-automatiques permettant la réalisation de jus à partir d'un agrume placé entier dans l'appareil.

Usuellement, les presse-agrumes manuels ou électriques utilisés dans un cadre domestique nécessitent de couper l'agrume en deux pour extraire le jus du demi-agrume sur un cône de pressage. Le cône de pressage peut être rotatif ou non.

Des ustensiles ou appareils prévus pour extraire le jus d'un agrume entier ont déjà été proposés.

Dans le domaine des ustensiles ou appareils domestiques, le document GB 2 404 844 décrit un tube perforé pour extraire le jus d'un agrume entier. Toutefois un effort important est nécessaire pour extraire le jus, et le rendement n'est pas très important.

Le document DE 20 2004 013 187 U propose un outil tubulaire adapté sur un presse-agrume électrique à entraînement rotatif. Cet outil permet également d'extraire du jus à partir d'un agrume entier. Toutefois, un effort de pressage latéral important est nécessaire pour extraire suffisamment de jus.

Ces deux appareils nécessitent une intervention manuelle importante de la part de l'utilisateur.

Le document ES 2 010 125 présente une machine utilisant la pression réalisée entre deux parois verticales opposées, disposées dans une cavité en forme de boîte, dont l'une coulissante est animée par un mouvement de va et vient généré par un excentrique et des ressorts de rappel. Un disque tournant horizontalement placé en partie supérieure et comprenant une rampe hélicoïdale ajourée permet d'introduire une orange à la fois. Une entaille est réalisée par un couteau, disposé sur un disque inférieur tournant, pour permettre au jus de s'écouler sur une grille de filtration. Une fois le fruit aplati après l'ouverture de la presse, un orifice d'évacuation se place en coïncidence pour que la peau puisse tomber dans un bac à déchets. Un tel appareil présente l'inconvénient de mélanger au jus réalisé les huiles essentielles et autres essences de l'écorce ainsi que les polluants contenus dans le flavédo (épaisseur de la peau sous l'écorce, colorée). De plus, le rendement apparaît insuffisant. L'encombrement et le poids d'une telle machine sont préjudiciables à un usage domestique.

Le document WO 03 077717 ou AU 2002 253 517 décrit une machine utilisant la combinaison de rotation de différents tambours, pourvus de reliefs crantés, disposés dans une cuve unique inclinée pour favoriser l'écoulement du jus par gravité. Le mécanisme propose de contraindre le fruit entier à buter sur un couteau fixe positionné de manière à le trancher par moitié avant de broyer les morceaux obtenus. Cette machine peut être utilisée pour les agrumes mais aussi pour d'autres fruits. Une telle réalisation n'apporte pas de réponse satisfaisante pour l'obtention d'un jus d'orange pourvu de bonnes qualités organoleptiques. En effet, le dispositif utilisé pour le pressage a également pour inconvénient de mélanger au jus réalisé les huiles essentielles et autres essences de l'écorce ainsi que les polluants contenus dans le flavédo. Le rendement de ce procédé est assez moyen, il engendre un effet négatif spécifique car en pressant le fruit sur lui-même, une partie du jus est absorbée par l'albédo (partie spongieuse blanche qui tapisse l'intérieur des agrumes). De plus le nettoyage d'un tel appareil apparaît contraignant.

Le brevet US 5 035 174 détaille un appareil compact qui propose de compresser l'orange entière par un piston-écrou, animé par une vis sans fin, sur un dôme constitué de nervures annulaires comprenant en sa partie centrale inférieure une pointe creuse chargée de mettre en perce le fruit. Bien que simplifié, ce dispositif présente aussi les désavantages des modèles plus encombrants concernant la qualité du jus pollué par les arômes de l'écorce et le rendement insuffisant dû au mode de pression unique choisi.

Le document EP 1 387 622 décrit un système de compression et d'aspiration combinées. Le fruit entier est disposé entre deux berceaux métalliques constitués de couteaux radiaux qui s'emboîtent les uns dans les autres, à la manière des doigts des mains croisées, lorsque les deux parties se rapprochent de telle manière que le fruit est découpé en lanières, en forme de fuseaux horaires. En même temps un tube perce en son centre, par sa base, l'orange et aspire par un vide d'air : pulpe, jus et pépins qui sont filtrés par une crépine ménagée dans la partie inférieure du cylindre creux. Une telle machine industrielle est difficile à transposer à une échelle réduite qui soit adaptée à l'utilisation grand public, sur un plan de travail par exemple.

Différents types de machines alimentées avec des agrumes entiers utilisent un dispositif de coupe du fruit en deux moitiés, associé à un ou deux dispositifs de pressage. Dans le document US 5 320 032 les dispositifs de pressage sont animés par biellettes. Dans le document FR 2 629 326 les dispositifs de pressage sont formés par deux carrousels rotatifs disposés dans un même plan. Dans le document FR 2 836 016 les dispositifs de pressage sont formés par deux carrousels rotatifs disposés dans deux plans parallèles. Dans le document WO 2005/041695 le dispositif de pressage comprend un carrousel unique. Le dispositif de découpe est associé à un dispositif de retournement prévu pour recueillir la deuxième moitié d'agrume en attente de pressage. De telles machines apparaissent peu adaptées à une utilisation domestique, du fait de leur construction, de leur encombrement, de leur nettoyage, de leur coût. De plus, le jus exprimé peut venir en contact avec l'écorce extérieure, ce qui affecte la qualité du jus. Un pressage trop important de la peau peut extraire des composés non désirés.

Dans le document EP 0 594 525 le pressage final est assuré par un mouvement de translation. Cette disposition permet de limiter le contact du jus avec l'écorce extérieure, ce qui contribue à améliorer la qualité du jus. Toutefois, la construction de cet appareil reste très onéreuse pour une utilisation domestique.

D'autres types de machines découpent partiellement l'agrume avant de le presser. Le document ES 2 036 124 divulgue un appareil comprenant un ensemble presseur composé d'un dôme de pressage creux disposé en partie supérieure, mobile en translation verticale, d'un ensemble de couteaux disposés radialement, et d'un cône de pressage disposé en partie inférieure. Au repos, le dôme de pressage et le cône de pressage sont éloignés l'un de l'autre de l'espace nécessaire pour qu'une orange se positionne par gravité au sortir d'une conduite tubulaire. Les couteaux présentent en partie haute une forme de berceau qui retient l'orange pour la phase de travail. La motorisation entraîne d'une part la descente du dôme de pressage et d'autre part la rotation du cône de pressage. L'orange entière est progressivement découpée en portions puis pressée. Un tamis disposé sous le cône de pressage permet de recueillir les peaux et de les évacuer vers un dispositif de collecte. Une telle réalisation présente cependant plusieurs inconvénients. La partie basse du fruit peut se retourner vers l'intérieur lors de la phase de découpe sur les couteaux, ce qui peut entraîner un contact du jus avec l'écorce. Ce défaut est accentué par l'usage de fruits qui ne sont pas fraîchement cueillis, car l'élasticité de la peau devient telle que les quartiers se retournent sur une partie plus importante. Les quartiers d'orange peuvent se coincer entre les couteaux fixes et il faut attendre l'éventuelle arrivée du fruit suivant pour chasser les déchets, ce qui peut engendrer des bourrages du tamis. La recherche d'un rendement important risque d'entraîner un pressage excessif de la peau, préjudiciable à la qualité du jus. Le retour du dôme de pressage creux en position haute entraîne la rotation du cône de pressage. L'éjection des peaux découpées est liée au mouvement du dôme de pressage. Le nettoyage n'est pas particulièrement facilité.

Le document EP 1 053 710 divulgue un appareil reprenant le principe précité avec une simplification du mécanisme d'entraînement. Toutefois les modifications apportées sont insuffisantes pour remédier aux inconvénients précités.

Un appareil selon le préambule de la revendication 1 est connu du document EP1016348.

Un but de l'invention est de proposer un appareil permettant de presser un agrume entier, présentant une construction simple et performante.

Un autre but de l'invention est de proposer un appareil permettant de presser un agrume entier, qui soit adapté à un usage individuel. Par usage individuel, on entend une utilisation dans un cadre domestique ou dans une structure de restauration, par une personne en vue de la préparation instantanée d'un jus.

Un autre but de l'invention est de proposer un appareil permettant de presser un agrume entier, présentant un encombrement réduit.

Un autre but de l'invention est de proposer un appareil permettant de presser un agrume entier, dans lequel la qualité du jus obtenu est élevée.

Un autre but de l'invention est de proposer un appareil permettant de presser un agrume entier, dans lequel le rendement d'obtention du jus est important.

Un autre but de l'invention est de proposer un appareil permettant de presser un agrume entier, dont le nettoyage est facilité.

Un autre but de l'invention est de proposer un appareil permettant de presser un agrume entier, dont l'utilisation est simple.

Un autre but de l'invention est de proposer un appareil permettant de presser un agrume entier, dont l'utilisation est peu contraignante.

Ces buts sont atteints avec un presse-agrumes pour le pressage d'un agrume entier, comportant un cône de pressage et un dôme de pressage disposés selon un axe, ainsi que des couteaux agencés entre le cône de pressage et le dôme de pressage, les couteaux s'étendant radialement par rapport à l'axe, le cône de pressage étant mobile en rotation par rapport au dôme de pressage et aux couteaux, le dôme de pressage étant mobile par rapport aux couteaux et au cône de pressage, des organes écarteurs étant agencés entre les couteaux et le cône de pressage, du fait que les organes écarteurs présentent une section augmentant à partir des couteaux en direction du cône de pressage. Cette disposition permet de faciliter et de guider le déploiement des quartiers ou des secteurs d'agrume en cours de découpe. Ces dispositions permettent d'éviter le retournement des extrémités des quartiers ou des secteurs d'agrume lors de la découpe de l'agrume en quartiers ou en secteurs. Ces dispositions contribuent à l'obtention d'une bonne qualité de jus en évitant le contact de la partie externe de la peau d'agrume avec le cône de pressage. L'amertume du jus liée à l'extraction des huiles, essences et pesticides contenus dans la peau de l'agrume peut être évitée.

Avantageusement alors, chacun des couteaux est associé à un des organes écarteurs. Cette disposition permet de simplifier la réalisation de l'appareil. En alternative, chacun des couteaux peut être associé à plusieurs organes écarteurs.

Avantageusement encore, les organes écarteurs s'étendent latéralement de part et d'autre des couteaux. Chaque organe écarteur peut s'étendre des deux côtés d'un des couteaux, ou seulement sur l'un des côtés d'un des couteaux.

Avantageusement encore, les organes écarteurs sont solidaires des couteaux. Cette disposition permet de simplifier la construction de l'appareil. Cette disposition permet également de faciliter le nettoyage de l'appareil.

Avantageusement encore, les organes écarteurs et les couteaux appartiennent à une unité de coupe susceptible d'être déplacée par rapport au cône de pressage selon ledit axe. Cette disposition permet un accès plus aisé au cône de pressage, ce qui permet de faciliter le nettoyage de l'appareil.

Selon un mode de réalisation avantageux, le cône de pressage est entraîné en rotation. En alternative, le cône de pressage pourrait être immobile en rotation, les couteaux et le dôme de pressage étant alors mobiles en rotation.

Selon un mode de réalisation avantageux, le cône de pressage est agencé en dessous du dôme de pressage. Cette disposition permet d'éviter que le jus obtenu soit pollué par les contacts avec la peau de l'orange lors d'un écoulement gravitaire.

Selon un mode de réalisation avantageux, le dôme de pressage est mobile en translation selon l'axe. Cette disposition permet d'obtenir un pressage identique des différents quartiers ou secteurs en cours de découpe, quelque soit le gabarit de l'agrume.

L'invention sera mieux comprise à l'étude d'un exemple de réalisation, pris à titre nullement limitatif, illustré dans les figures annexées, dans lesquelles :
- la figure 1 est une vue en élévation de face d'un presse-agrumes pour le pressage d'un agrume entier selon l'invention,
- la figure 2 est une vue en élévation de côté du presse-agrumes pour le pressage d'un agrume entier illustré à la figure 1,
- la figure 3 est une vue en perspective et en écorché du presse-agrumes pour le pressage d'un agrume entier illustré aux figures 1 et 2,
- la figure 4 est une vue en coupe de côté du presse-agrumes pour le pressage d'un agrume entier illustré aux figures 1 à 3,
- la figure 5 est une vue en perspective de dessus du réservoir appartenant à l'unité de rinçage,
- la figure 6 est une vue en perspective de dessus du dôme de pressage,
- la figure 7 est une vue en perspective de dessous du dôme de pressage, dans laquelle les patins en élastomère ont été retirés,
- la figure 8 est une vue en perspective de dessous du dôme de pressage, dans laquelle les patins en élastomère sont en place,
- la figure 9 est une vue partielle en perspective de dessous d'une variante de réalisation du dôme de pressage, dépourvue de patins en élastomère,
- la figure 10 est une vue de dessus légèrement en perspective de l'unité de coupe,
- la figure 11 est une vue en perspective et en coupe de l'unité de coupe,
- la figure 12 est une vue en perspective de dessus de l'unité de coupe et de son dispositif de relevage,
- la figure 13 est une vue du réceptacle à jus, de l'organe d'éjection et du cône de pressage,
- la figure 14 est une vue du récipient à déchets.

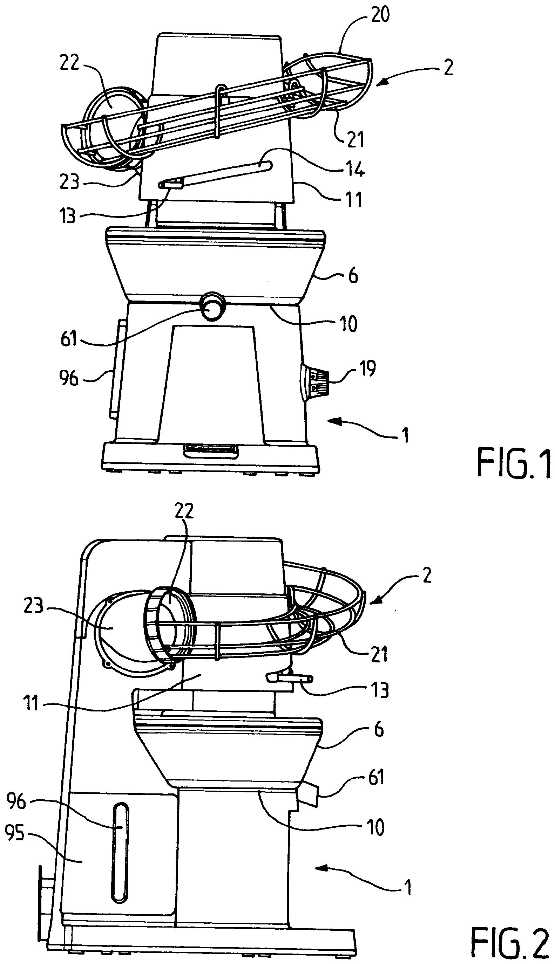

Le presse-agrumes pour le pressage d'un agrume entier illustré aux figures 1 à 4 comporte un bâti 1, une unité d'alimentation 2, un dôme de pressage 3, une unité de coupe 4, un cône de pressage 5, et une unité de collecte 6.

Le presse-agrumes est agencé selon un axe 71 présentant avantageusement une orientation verticale par rapport au plan d'appui du bâti 1. Le cône de pressage 5 et le dôme de pressage 3 sont disposés selon l'axe 71.

Le presse-agrumes comporte un organe de commande 19 associé à une unité de commande (non représentée aux figures). L'organe de commande 19 est agencé sur le bâti 1.

Le bâti 1 forme un socle 10 prévu pour recevoir l'unité de collecte 6. L'unité de collecte 6 est amovible par rapport au bâti 1.

Le cône de pressage 5 présente des conformations en relief 51 prévues pour l'extraction du jus à partir des quartiers d'agrume. Le cône de pressage 5 est agencé dans l'unité de collecte 6. Le cône de pressage 5 est amovible par rapport à l'unité de collecte 6. Le cône de pressage 5 est entraîné en rotation par rapport au bâti 1. Le cône de pressage 5 est avantageusement associé à une motorisation 9. La motorisation 9 comporte un moteur électrique agencé dans le bâti 1 sous le socle 10.

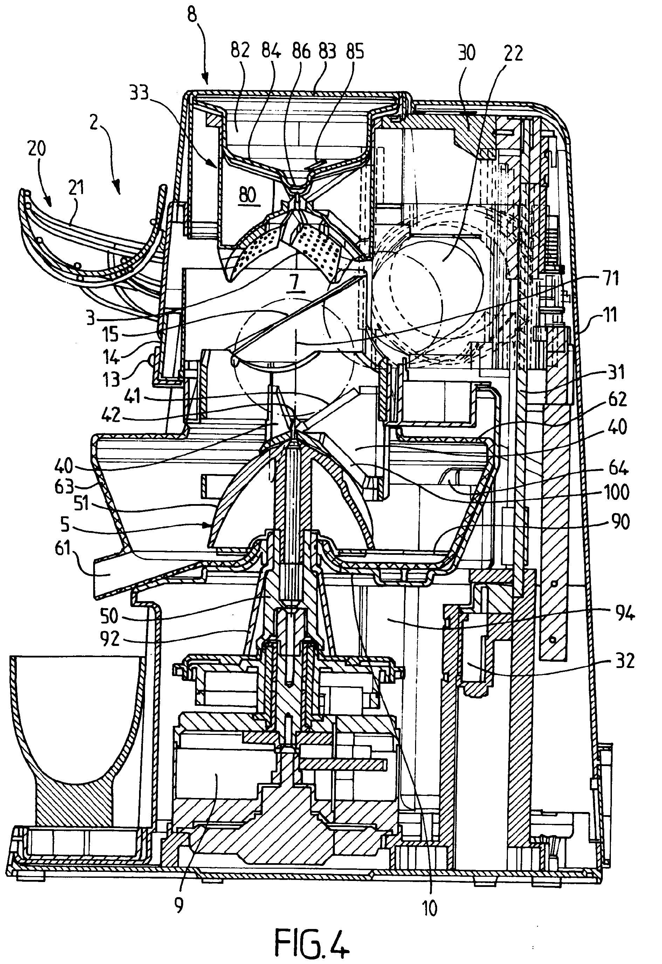

L'unité de coupe 4 comporte plusieurs couteaux 40 prévus pour fendre l'agrume en quartiers. L'unité de coupe 4 est agencée au dessus du cône de pressage 5. L'unité de coupe 4 est logée dans une chambre 7. La chambre 7 est ménagée dans un montant 11 du bâti 1 au dessus du socle 10. L'unité de coupe 4 est montée sur un support 12 relevable au moyen d'une manette 13. La manette 13 est montée dans une rainure de guidage 14 inclinée. La rainure de guidage 14 est ménagée dans la paroi du montant 11. Ainsi l'unité de coupe 4 est susceptible d'être déplacée par rapport au cône de pressage 5 selon l'axe 71, tel qu'illustré sur la figure 4.

Le dôme de pressage 3 est agencé au dessus de l'unité de coupe 4. Le dôme de pressage 3 est agencé à l'intérieur du montant 11. Le dôme de pressage 3 est logé dans la chambre 7. Le dôme de pressage 3 est monté mobile par rapport au bâti 1. Plus particulièrement, le dôme de pressage 3 est monté mobile selon l'axe 71. A cet effet, le dôme de pressage 3 est monté sur un support 30 entraîné en translation sur un guidage 31. Le dôme de pressage 3 est avantageusement associé à une autre motorisation 32 distincte de la motorisation 9. Ainsi le dôme de pressage 3 est entraîné indépendamment du cône de pressage 5. L'autre motorisation 32 comporte un moteur électrique agencé dans le bâti 1 en dessous du montant 11. Le support 30 associé au dôme de pressage 3 est entraîné par l'autre motorisation 32.

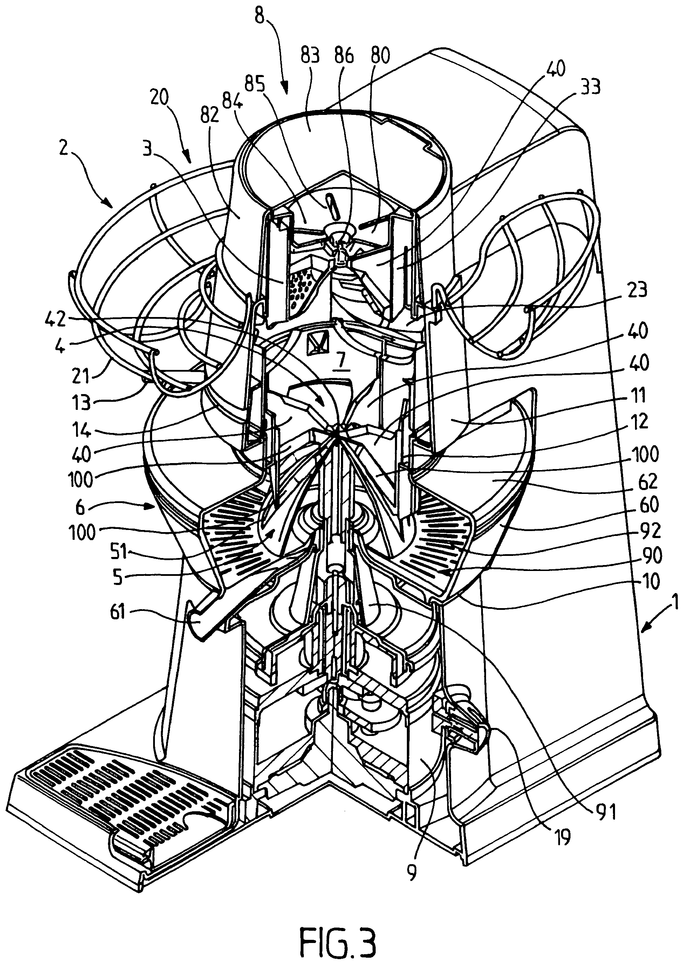

L'unité d'alimentation 2 est agencée sur le montant 11 ainsi que dans le montant 11. L'unité d'alimentation 2 comporte une zone de stockage 20 prévue pour recevoir les agrumes ainsi que des moyens pour amener un agrume vers l'unité de coupe 4. Plus particulièrement, la zone de stockage 20 est formée par un toboggan 21. Le toboggan 21 est ouvert en partie supérieure, pour faciliter la mise en place des agrumes. Le toboggan 21 est incliné en direction d'une ouverture 22 ménagée dans une paroi extérieure du bâti 1. L'ouverture 22 débouche dans la chambre 7 dans laquelle est logée l'unité de coupe 4 (visibles sur les figures 3 et 4). Plus particulièrement, le bâti 1 forme un conduit 23 prolongeant l'ouverture 22.

Le dôme de pressage 3 est mobile par rapport aux couteaux 40 et au cône de pressage 5. Plus particulièrement, le dôme de pressage 3 est mobile selon l'axe 71 en direction des couteaux 40 et du cône de pressage 5.

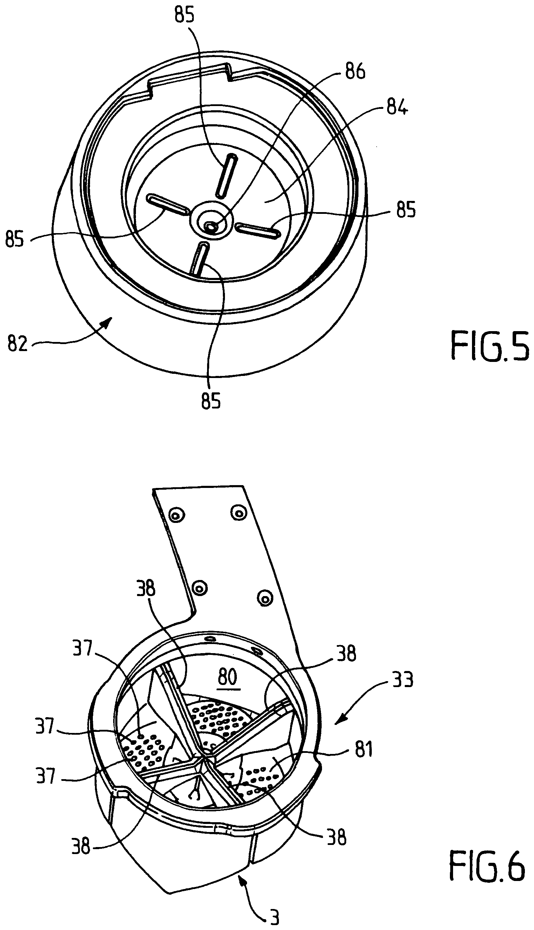

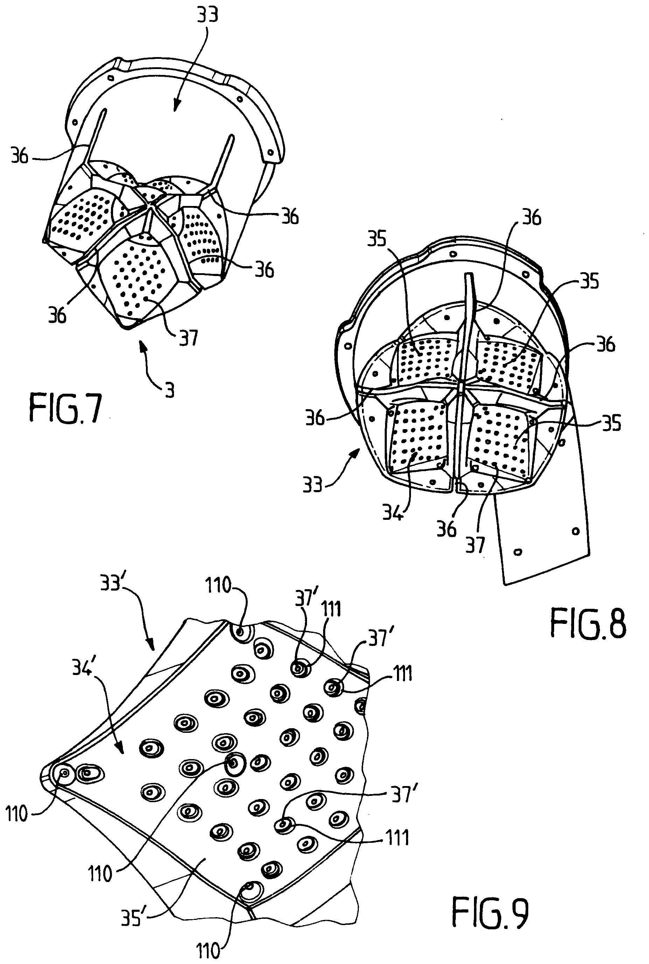

Tel que mieux visible sur les figures 7 et 8, le dôme de pressage 3 est ménagé sur une extrémité d'un piston 33. Le dôme de pressage 3 présente une paroi d'appui 34. La paroi d'appui 34 comporte quatre segments 35 séparés par des logements 36. Chaque logement 36 est prévu pour recevoir l'un des couteaux 40. Tel que visible sur la figure 6, le piston 33 présente des parois radiales 38 du côté opposé à la paroi d'appui 34 et aux logements 36. Les parois radiales 38 ménagent les logements 36.

La paroi d'appui 34 présente une géométrie adaptée au profil des conformations en relief 51 du cône de pressage 5. Avantageusement la distance entre les conformations en relief 51 et la paroi d'appui 34 est sensiblement constante lorsque le piston 33 occupe une position à proximité du cône de pressage 5. La course du piston 33 peut être réglée pour définir une distance minimum correspondant à l'épaisseur de peau d'un quartier d'agrume. En alternative ou en complément, l'unité de commande peut contrôler l'arrêt de la course du piston 33 en détectant une augmentation de l'effort nécessaire pour déplacer le piston, du fait que le piston 33 a fini de presser la pulpe et commence à compresser la peau de l'agrume.

Selon une forme de réalisation avantageuse illustrée aux figures 7 et 8, la paroi d'appui 34 est réalisée en élastomère. Les segments 35 sont formés par des patins élastomère visibles sur la figure 8. La figure 7 illustre le piston 33 avant montage des patins élastomère. Les patins élastomère permettent de mieux répartir la pression exercée par le dôme de pressage 3 sur la peau de l'agrume, ce qui contribue à éviter l'extraction des substances amères. Les patins élastomère permettent également de retenir la peau de l'agrume en fin de découpe et ainsi de favoriser une extraction plus complète du jus.

Le dôme de pressage 3 est avantageusement associé à une unité de rinçage 8. A cet effet, le piston 33 forme un réservoir 80 prévu pour recevoir un liquide de rinçage. Le réservoir 80 présente un fond 81 muni de perforations 37 débouchant dans la paroi d'appui 34, tel que visible sur les figures 3, 4 et 6. Ainsi les perforations 37 communiquent avec le réservoir 80 agencé au dessus du dôme de pressage 3. Les perforations 37 sont ménagées dans les segments 35, tel que visible sur les figures 7 et 8. Les perforations 37 mettent en communication le réservoir 80 avec la chambre 7. Les perforations 37 sont définies en forme et en nombre pour laver les couteaux 40 et les recoins de la chambre 7.

De plus, tel que visible sur les figures 3, 4 et 5, un entonnoir répartiteur 82 est monté en partie supérieure du montant 11 au dessus du piston 33. L'entonnoir répartiteur 82 présente des passages d'écoulement 85, 86 disposés au dessus du réservoir 80. L'entonnoir répartiteur 82 est avantageusement monté amovible par rapport au bâti 1 de l'appareil. L'entonnoir répartiteur 82 forme un bouchon pour la chambre 7. L'entonnoir répartiteur 82 est fermé par un couvercle 83, visible sur les figures 3 et 4 mais non représenté sur la figure 5. Le piston 33 est centré avec jeu par rapport à l'entonnoir répartiteur 82.

L'entonnoir répartiteur 82 présente un fond 84 dans lequel sont ménagés les passages d'écoulement 85, 86. Les passages d'écoulement 85 agencés de manière radiale sont prévus pour répartir l'eau dans les compartiments du réservoir 80 délimités par les parois radiales 38, tels que visible sur les figures 3 et 6. A cet effet les passages d'écoulement 85 agencés de manière radiale sont disposés entre les parois radiales 38 du piston 33. Le passage d'écoulement 86 agencé en position centrale est disposé au point bas du fond 84 et permet la vidange complète du liquide contenu dans l'entonnoir répartiteur 82. La section des passages d'écoulement 85, 86 est supérieure à la section des perforations 37, de sorte que l'écoulement du contenu du réservoir 80 par les perforations 37 est plus lent que l'écoulement du contenu de l'entonnoir répartiteur 82 par les passages d'écoulement 85, 86.

La figure 9 illustre une variante de réalisation d'un dôme de pressage 3' pouvant être utilisé à la place du dôme de pressage 3. Le dôme de pressage 3' appartient à un piston 33' comparable au piston 33. Le dôme de pressage 3' diffère du dôme de pressage 3 en ce que la paroi d'appui 34' présente des segments 35' munis de crampons 110 prévus pour agripper la peau de l'agrume. Cette disposition permet un bon accrochage de la peau de l'agrume tout en évitant une extraction des substances amères de la paroi extérieure de la peau. Cette disposition contribue ainsi à l'obtention d'une bonne qualité de jus. Tel que visible sur la figure 9, l'un des crampons 110 est disposé dans la partie centrale de la paroi d'appui 34', les autres crampons 110 étant disposés en périphérie de la paroi d'appui 34'. Les segments 35' sont formés sur l'extrémité du piston 33'.

Le dôme de pressage 3' peut être également associé à l'unité de rinçage 8. A cet effet la paroi d'appui 34' comporte des perforations 37'. Tel que montré sur la figure 9, les perforations 37' débouchent avantageusement au sommet de bossages 111 ménagés sur la paroi d'appui 34'. Ainsi le dôme de pressage 3' est ménagé sur une extrémité du piston 33' formant un réservoir.

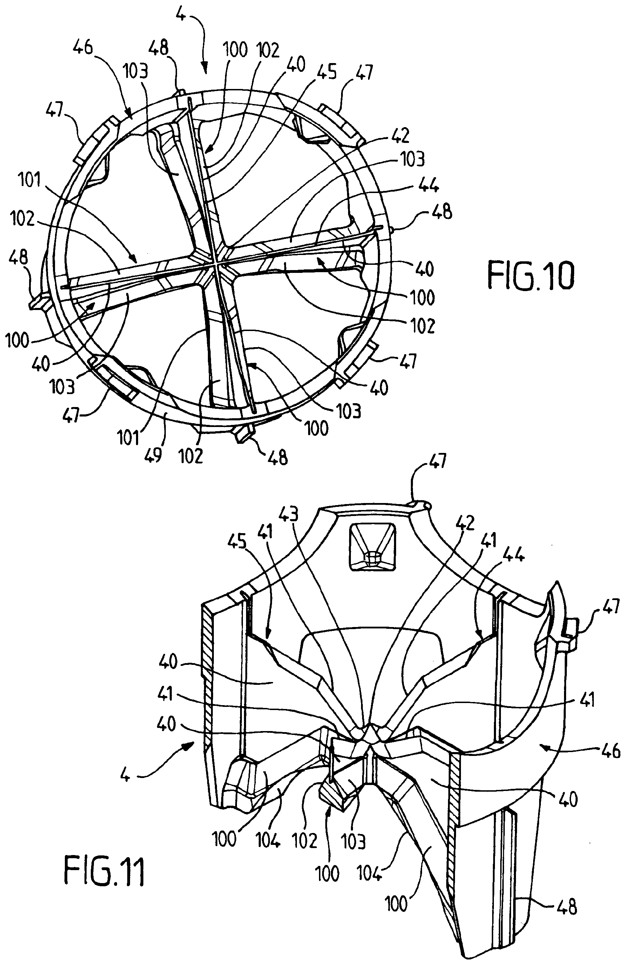

L'unité de coupe 4 visible sur les figures 3 et 4 est plus particulièrement illustrée sur les figures 10 à 12.

Tel que visible sur les figures 3 et 4, les couteaux 40 sont agencés entre le cône de pressage 5 et le dôme de pressage 3. Le cône de pressage 5 est mobile en rotation par rapport au dôme de pressage 3 et aux couteaux 40. Les couteaux 40 sont disposés en étoile. Les couteaux 40 s'étendent radialement à partir de l'axe 71.

Plus particulièrement, les couteaux 40 sont formés par deux lames 44, 45 disposées à angle droit. Les lames 44, 45 sont montées dans un bloc de coupe 46. Si désiré le bloc de coupe 46 peut être surmoulé sur les lames 44, 45.

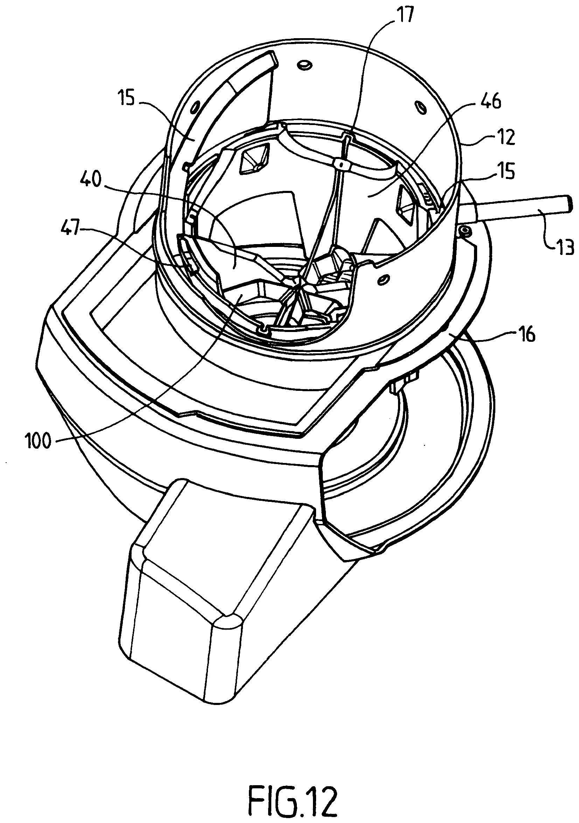

L'unité de coupe 4 est susceptible d'être déplacée par rapport au cône de pressage 5 selon l'axe 71 au moyen de la manette 13. A cet effet, le bloc de coupe 46 présente des organes d'appui 47 et des organes de guidage 48 visibles sur les figures 10 et 11. Les organes d'appui 47 et les organes de guidage 48 sont ménagés sur une paroi périphérique 49 du bloc de coupe 46. La paroi périphérique 49 forme une couronne. Chaque organe d'appui 47 est prévu pour coopérer avec une rampe 15 ménagée sur le support 12, tel qu'illustré sur la figure 12. Deux rampes 15 sont agencées de manière opposée sur le support 12. Le support 12 est disposé sur une partie 16 du bâti de l'appareil. Les organes de guidage 48 coopèrent avec des éléments de guidage 17 du bâti. Les éléments de guidage 17 sont avantageusement ménagés dans la partie 16. La manette 13 est utilisée pour entraîner en rotation le support 12 et relever l'unité de coupe 4. Ainsi l'unité de coupe 4 est déplacée de manière démultipliée, la course de la rainure de guidage 14 et des rampes 15 s'additionnant.

Le bord inférieur des couteaux 40 s'étend à proximité du cône de pressage 5. Le bord supérieur des couteaux 40 présente une partie interne 41 inclinée en direction de l'axe 71 et du cône de pressage 5.

L'unité de coupe 4 comporte des organes de centrage prévus pour placer l'agrume selon l'axe 71. Plus particulièrement, les organes de centrage sont formés par les parties internes 41 inclinées du bord supérieur des couteaux 40. Ainsi le bord supérieur des couteaux 40 forme un siège prévu pour recevoir un agrume avant sa découpe.

L'unité de coupe 4 comporte un organe de retenue 42 prévu pour maintenir l'agrume en cours de découpe. L'organe de retenue 42 est agencé sur l'axe 71 au point de convergence des couteaux 40. Plus particulièrement, l'organe de retenue 42 est formé par les extrémités internes recourbées 43 des couteaux 40.

L'unité de coupe 4 est avantageusement prévue pour éviter le retournement des extrémités des quartiers d'agrume fendus par les couteaux 40. A cet effet, l'unité de coupe 4 comporte plusieurs organes écarteurs 100, mieux visibles sur les figures 10 à 12. Tel que montré sur les figures 3 et 4, les organes écarteurs 100 sont agencés entre les couteaux 40 et le cône de pressage 5. Chacun des couteaux 40 est associé à un des organes écarteurs 100.

Les organes écarteurs 100 sont formés par des bras 101 du bloc de coupe 46. Les bras 101 sont agencés entre les couteaux 40 et le cône de pressage 5. Les bras 101 sont issus de la paroi périphérique 49 du bloc de coupe 46. Les bras 101 se rejoignent en leur extrémité centrale.

Les couteaux 40 présentent une partie insérée dans les bras 101. Les organes écarteurs 100 sont solidaires des couteaux 40. Les organes écarteurs 100 et les couteaux 40 appartiennent à l'unité de coupe 4 susceptible d'être déplacée par rapport au cône de pressage 5 selon l'axe 71.

Les organes écarteurs 100 s'étendent longitudinalement autour du bord inférieur des lames 44, 45.

Les organes écarteurs 100 s'étendent latéralement de part et d'autre des couteaux 40. Chaque organe écarteur 100 comporte deux faces latérales 102, 103 prévues pour relever les bords des quartiers d'agrume en cours de découpe. Les faces latérales 102, 103 de chaque organe écarteur 100 sont disposées de part et d'autre du couteau 40 correspondant. Ainsi chaque quartier d'agrume en cours de découpe coopère avec deux organes écarteurs 100 appartenant aux deux bras 101 disposés chacun d'un des côtés dudit quartier. Les organes écarteurs 100 présentent une section augmentant à partir des couteaux 40 en direction du cône de pressage 5. Plus particulièrement, la section des organes écarteurs 100 est triangulaire, tel que bien visible sur la figure 11. Chaque organe écarteur 100 présente une face inférieure 104 adaptée au profil des conformations en relief 51 du cône de pressage 5, afin d'éviter que les peaux des quartiers d'agrume pressés ne soient entraînées entre les organes écarteurs 100 et le cône de pressage 5. Les logements 36 du piston 33 présentent une forme adaptée à la réception des couteaux 40 et des organes écarteurs 100.

Le cône de pressage 5 est agencé en dessous du dôme de pressage 3 et de l'unité de coupe 4. Le cône de pressage 5 est entraîné en rotation selon l'axe 71. A cet effet, le cône de pressage 5 est monté sur une sortie d'entraînement 50 reliée à la motorisation 9. Le diamètre du cône de pressage 5 est adapté au pressage des quartiers d'agrume découpés par les couteaux 40. La longueur des reliefs 51 est adaptée au calibre maximal d'agrume utilisé avec l'appareil. Le cône de pressage 5 comporte un pivot 52 prévu pour être engagé dans une cavité du bloc de coupe 46.

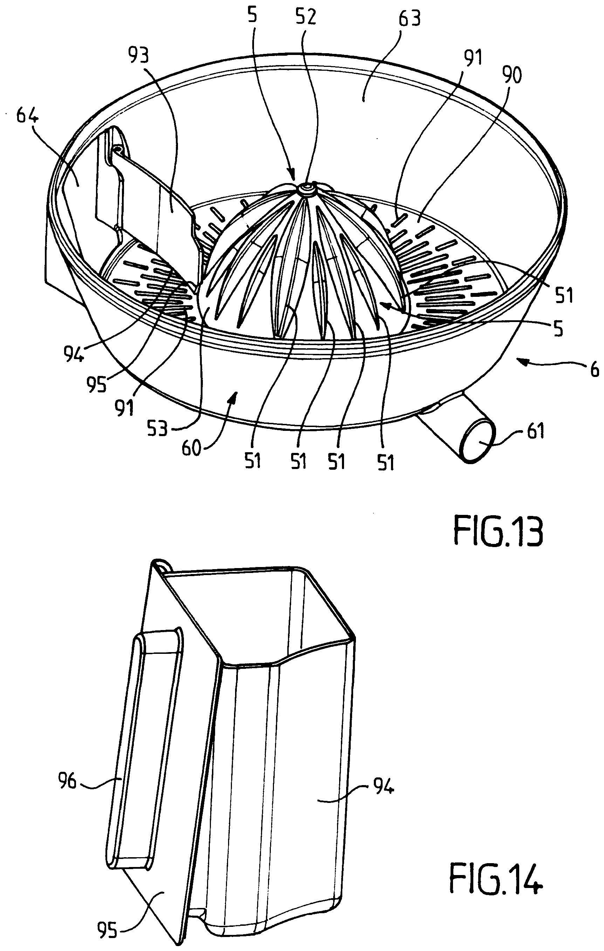

L'unité de collecte 6 comporte un réceptacle à jus 60 mieux visible sur la figure 13. Le cône de pressage 5 est agencé dans le réceptacle à jus 60. Le réceptacle à jus 60 présente un organe de versement 61. Tel que visible sur les figures 1 à 4, un couvercle 62 ferme le réceptacle à jus 60.

Un organe d'éjection 90 est agencé en dessous du cône de pressage 5. L'organe d'éjection 90 est agencé dans le réceptacle à jus 60. L'organe d'éjection 90 s'étend autour du bord inférieur du cône de pressage 5. L'organe d'éjection 90 s'étend jusqu'à une paroi latérale 63 du réceptacle à jus 60. L'organe d'éjection 90 présente une forme de disque. Le diamètre apparent du disque au delà du cône de pressage est environ de l'ordre du quart de la circonférence maximum de l'agrume. L'organe d'éjection 90 est muni de perforations 91 prévues pour l'écoulement du jus dans le fond du réceptacle à jus 60.

L'organe d'éjection 90 est entraîné en rotation. A cet effet l'organe d'éjection 90 est monté sur une autre sortie d'entraînement 92 reliée à la motorisation 9. Selon le mode de réalisation illustré aux figures, la sortie d'entraînement 50 et l'autre sortie d'entraînement 92 sont coaxiales.

Avantageusement, l'organe d'éjection 90 est entraîné en rotation selon le sens de rotation opposé au sens de rotation du cône de pressage 5.

Un organe déflecteur 93 est agencé au dessus de l'organe d'éjection 90. L'organe déflecteur 93 forme un guidage vers une ouverture latérale 64 ménagée dans la paroi latérale 63 du réceptacle à jus 60. L'organe déflecteur 93 comporte un bord inférieur 94 disposé à proximité de l'organe d'éjection 90. L'organe déflecteur 93 comporte un bord latéral libre 95 prévu pour venir en contact avec une partie inférieure 53 du cône de pressage 5, disposée en dessous des conformations en reliefs 51. L'organe déflecteur 93 est agencé après l'ouverture latérale 64 par rapport au sens de rotation de l'organe d'éjection 90. L'ouverture latérale 64 s'étend jusqu'au niveau de l'organe d'éjection 90. L'ouverture latérale 64 débouche au-dessus d'un récipient à déchets 94 illustré sur la figure 14. Tel que visible sur les figures 1 et 2, le récipient à déchets 94 est agencé dans le bâti 1. Le récipient à déchets 94 présente une face latérale externe 95 munie d'un organe de préhension 96.

Le presse-agrumes pour le pressage d'un agrume entier illustré aux figures 1 à 14 fonctionne et s'utilise de la manière suivante.

L'utilisateur place un ou plusieurs agrumes dans l'unité d'alimentation 2. Un agrume arrive en position dans la chambre 7 sur l'unité de coupe 4 et prend appui sur les parties internes 41 inclinées du bord supérieur des couteaux 40. Le dôme de pressage 3 occupe une position relevée dégageant un espace de réception d'un agrume dans la chambre 7 au dessus des couteaux 40.

L'utilisateur peut lancer un cycle de fonctionnement en actionnant l'organe de commande 19 associé à l'unité de commande. Si désiré, une version tout automatique de l'appareil peut détecter la présence d'un agrume sur l'unité de coupe 4 et lancer automatiquement un cycle de fonctionnement de l'appareil.

L'unité de commande pilote la descente du dôme de pressage 3 sur les couteaux 40 au moyen de l'autre motorisation 32, afin de fendre l'agrume en quartiers. La paroi d'appui 33 enveloppe la partie supérieure de l'agrume. Les crampons 36 permettent un accrochage dans la peau de l'agrume en évitant une extraction des substances amères de la paroi extérieure de la peau.

Les organes écarteurs 100 permettent d'éviter que les extrémités des quartiers d'agrume obtenus ne se retournent et mettent en contact la peau de l'agrume avec le cône de pressage 5. Ainsi les extrémités des quartiers d'agrume s'engagent progressivement dans les espaces délimités par le dôme de pressage 3, l'unité de coupe 4 et le cône de pressage 5. Si désiré, la vitesse de descente du dôme de pressage 3 peut dépendre de la position atteinte par le dôme de pressage 3.

L'unité de commande pilote également la rotation du cône de pressage 5. Si désiré, la rotation du cône de pressage 5 peut être effectuée à vitesse variable, et/ou présenter des sens de rotation alternés. La commande indépendante du mouvement du dôme de pressage 3 et du cône de pressage 5 permet de favoriser une extraction la plus complète possible du jus contenu dans l'agrume, sans exercer de pression excessive sur la peau de l'agrume, susceptible de détériorer la qualité du jus. Le jus est recueilli dans le réceptacle à jus 60 de l'unité de collecte 6 et s'écoule par l'organe de versement 61.

En fin de mouvement de descente du dôme de pressage 3, les couteaux 40 pénètrent dans les logements 35 du dôme de pressage 3 et séparent complètement les quartiers d'agrume. Le dôme de pressage 3 peut alors être relevé pour libérer les quartiers d'agrume pressés et découpés. La force tangentielle due à la différence de vitesse angulaire de rotation entre le cône de pressage 5 et l'organe d'éjection 90 permet de faciliter le décollement des quartiers d'agrume du cône de pressage 5. La valeur de la vitesse angulaire de rotation de l'organe d'éjection 90 est choisie pour favoriser une adhérence de la face intérieure des quartiers d'agrume découpés sur l'organe d'éjection 90.

L'utilisation de sens de rotation différents pour l'organe d'éjection 90 et le dôme de pressage 3 permet d'obtenir à la fois une différence de vitesse angulaire importante propice au décollement des quartiers d'agrume du cône de pressage 5 et une force centrifuge limitée favorisant à la fois l'adhérence de l'extrémité des quartiers d'agrume sur l'organe d'éjection 90 et une éjection correcte des quartiers d'agrume par l'ouverture latérale 64.

Selon une réalisation préférée, la vitesse angulaire de rotation de l'organe d'éjection 90 est inférieure à la vitesse angulaire de rotation du cône de pressage 5. Les quartiers d'agrume découpés s'orientent naturellement selon une direction transversale sur l'organe d'éjection 90, ce qui permet de limiter la largeur de l'organe d'éjection 90. Les quartiers d'agrume découpés arrivent successivement au contact de l'organe déflecteur 93. L'organe déflecteur 93 repousse successivement les quartiers d'agrume découpés dans le récipient à déchets 94 par l'ouverture latérale 64.

En fin de cycle, le dôme de pressage 3 est ramené en position relevée par l'autre motorisation 32. La commande indépendante du mouvement du dôme de pressage 3 et du cône de pressage 5 permet d'accélérer le cycle de fonctionnement de l'appareil.

L'utilisateur peut ensuite réaliser un nouveau cycle de fonctionnement. L'utilisateur peut aussi réaliser un cycle de rinçage en remplissant le bouchon entonnoir répartiteur 82. Le liquide de nettoyage s'écoule par les perforations radiales 86 et la perforation centrale 85 dans le réservoir 80 pour remplir les compartiments séparés par les parois radiales 38. L'écoulement du contenu du réservoir 80 par les perforations 37 est progressif, ce qui permet de bénéficier de la pression du liquide contenu dans le réservoir 80 pour obtenir des jets de rinçage. Le liquide atteint la chambre 7, l'unité de coupe 4 et le cône de pressage 5 et peut être recueilli dans le réceptacle à jus 60.

Si désiré, l'utilisateur peut soulever l'unité de coupe 4 au moyen de la manette 13 pour retirer l'unité de collecte 6 et le cône de pressage 5 de la sortie d'entraînement 50. La rotation de la manette 13 entraîne le relevage du bloc de coupe 46 dans le logement 7. L'utilisateur peut aussi retirer le bouchon entonnoir répartiteur 82 du montant 11.

L'appareil ainsi proposé permet d'obtenir sans manipulation délicate un jus d'agrume de qualité élevée, avec un bon rendement.

La présente invention trouve une application notamment pour les appareils actionnés à la demande par un utilisateur, par exemple dans un cadre domestique ou dans une structure de restauration.

A titre de variante, les organes écarteurs 100 présentant deux faces 102, 103 pourraient notamment être remplacés par des séries de tiges, lamelles ou barreaux formant un peigne. Alors si désiré, ces tiges, lamelles ou barreaux pourraient être issus des couteaux 40.

A titre de variante, le mouvement du dôme de pressage 3 vers le cône de pressage 5 n'est pas nécessairement un mouvement de translation selon l'axe 71.

A titre de variante, l'autre motorisation 32 peut être remplacée par un entraînement manuel, par exemple un entraînement par levier. L'utilisateur contrôle alors directement le mouvement du dôme de pressage 3.

A titre de variante, le cône de pressage 5 n'est pas nécessairement entraîné en rotation par rapport au bâti 1. L'unité de coupe 4 et le dôme de pressage 3 peuvent être entraînés en rotation par rapport au cône de pressage 5.

A titre de variante, le dôme de pressage 3 n'est pas nécessairement mobile en translation pure par rapport au bâti 1.

A titre de variante, le dôme de pressage 3 n'est pas nécessairement mobile en translation par rapport au bâti 1. Le dôme de pressage 3 peut être immobile par rapport au bâti 1. Le cône de pressage 5 et l'unité de coupe 4 sont alors mobiles par rapport au dôme de pressage 3 et au bâti 1, avantageusement en translation.

A titre de variante, l'axe 71 n'est pas nécessairement vertical.

A titre de variante, le cône de pressage 5 n'est pas nécessairement agencé en dessous du dôme de pressage 3 et de l'unité de coupe 4.

A titre de variante, le nombre de couteaux 40 n'est pas nécessairement de quatre. Avantageusement, le nombre de couteaux est supérieur ou égal à trois et de préférence inférieur ou égal à neuf. Ainsi l'agrume peut être découpé en plusieurs secteurs ou fuseaux par les couteaux.

A titre de variante, le réservoir 80 n'appartient pas nécessairement au piston 33. Le réservoir 80 pourrait par exemple être monté dans le bâti 1 à la place du bouchon entonnoir répartiteur 82.

A titre de variante, l'entonnoir répartiteur 82 peut présenter au moins un passage d'écoulement 85, 86 disposé au dessus du réservoir 80.

A titre de variante, le dôme de pressage 3 ; 3' et le réservoir 80 ne sont pas nécessairement solidaires.

La présente invention n'est nullement limitée aux exemples de réalisation décrits et à leurs variantes, mais englobe de nombreuses modifications dans le cadre des revendications.

## Revendications

1. Presse-agrumes pour le pressage d'un agrume entier, comportant un cône de pressage (5) et un dôme de pressage (3) disposés selon un axe (71), ainsi que des couteaux (40) agencés entre le cône de pressage (5) et le dôme de pressage (3), les couteaux (40) s'étendant radialement par rapport à l'axe (71), le cône de pressage (5) étant mobile en rotation par rapport au dôme de pressage (3) et aux couteaux (40), le dôme de pressage (3) étant mobile par rapport aux couteaux (40) et au cône de pressage (5), des organes écarteurs (100) étant agencés entre les couteaux (40) et le cône de pressage (5), **caractérisé en ce que** les organes écarteurs (100) présentent une section augmentant à partir des couteaux (40) en direction du cône de pressage (5).

2. Presse-agrumes pour le pressage d'un agrume entier selon la revendication 1, **caractérisé en ce que** chacun des couteaux (40) est associé à un des organes écarteurs (100).

3. Presse-agrumes pour le pressage d'un agrume entier selon l'une des revendications 1 ou 2, **caractérisé en ce que** les organes écarteurs (100) s'étendent latéralement de part et d'autre des couteaux (40).

4. Presse-agrumes pour le pressage d'un agrume entier selon l'une des revendications 1 à 3, **caractérisé en ce que** les organes écarteurs (100) sont solidaires des couteaux (40).

5. Presse-agrumes pour le pressage d'un agrume entier selon l'une des revendications 1 à 4, **caractérisé en ce que** les organes écarteurs (100) et les couteaux (40) appartiennent à une unité de coupe (4) susceptible d'être déplacée par rapport au cône de pressage (5) selon l'axe (71).

6. Presse-agrumes pour le pressage d'un agrume entier selon l'une des revendications 1 à 5, **caractérisé en ce que** le cône de pressage (5) est entraîné en rotation.

7. Presse-agrumes pour le pressage d'un agrume entier selon l'une des revendications 1 à 6, **caractérisé en ce que** le dôme de pressage (3) est mobile en translation selon l'axe (71).

8. Presse-agrumes pour le pressage d'un agrume entier selon l'une des revendications 1 à 7, **caractérisé en ce que** le cône de pressage (5) est agencé en dessous du dôme de pressage (3).

## Patentansprüche

1. Zitruspresse zum Pressen einer ganzen Zitrusfrucht, aufweisend einen Presskegel (5) und einer entlang einer Achse (71) angeordneten Presskuppel (3) sowie zwischen dem Presskegel (5) und der Presskuppel (3) angeordneten Messern (40), wobei sich die Messer (40) radial zu der Achse (71) erstrecken, wobei der Presskegel (5) gegenüber der Presskuppel (3) und den Messern (40) drehbar ist, wobei die Presskuppel (3) relativ zu den Messern (40) und dem Presskegel (5) bewegbar ist, wobei Spreizorgane (100) zwischen den Messern (40) und dem Presskegel (5) angeordnet sind, **dadurch gekennzeichnet, dass** die Spreizorgane (100) einen von den Messern (40) zu dem Presskegel (5) hin zunehmenden Querschnitt aufweisen.

2. Zitruspresse zum Pressen einer ganzen Zitrusfrucht nach Anspruch 1, **dadurch gekennzeichnet, dass** jedes der Messer (40) einem der Spreizorgane (100) zugeordnet ist.

3. Zitruspresse zum Pressen einer ganzen Zitrusfrucht nach einem der Ansprüche 1 oder 2, **dadurch gekennzeichnet, dass** sich die Spreizorgane (100) seitlich auf beiden Seiten der Messer (40) erstrecken.

4. Zitruspresse zum Pressen einer ganzen Zitrusfrucht nach einem der Ansprüche 1 bis 3, **dadurch gekennzeichnet, dass** die Spreizorgane (100) mit den Messern (40) fest verbunden sind.

5. Zitruspresse zum Pressen einer ganzen Zitrusfrucht nach einem der Ansprüche 1 bis 4, **dadurch gekennzeichnet, dass** die Spreizorgane (100) und die Messer (40) zu einer Schneideinheit (4) gehören, die relativ zum Presskegel (5) entlang der Achse (71) verschiebbar ist.

6. Zitruspresse zum Pressen einer ganzen Zitrusfrucht nach einem der Ansprüche 1 bis 5, **dadurch gekennzeichnet, dass** der Presskegel (5) durch Rotation angetrieben wird.

7. Zitruspresse zum Pressen einer ganzen Zitrusfrucht nach einem der Ansprüche 1 bis 6, **dadurch gekennzeichnet, dass** die Presskuppel (3) entlang der Achse (71) translationsbeweglich ist.

8. Zitruspresse zum Pressen einer ganzen Zitrusfrucht nach einem der Ansprüche 1 bis 7, **dadurch gekennzeichnet, dass** der Presskegel (5) unterhalb der Presskuppel (3) angeordnet ist.

## Claims

1. Citrus squeezer for squeezing a whole citrus, comprising a squeezing cone (5) and a squeezing dome (3) arranged along an axis (71), as well as blades (40) arranged between the squeezing cone (5) and the squeezing dome (3), the blades (40) extending radially in relation to the axis (71), the squeezing cone (5) being mobile in rotation in relation to the squeezing dome (3) and to the blades (40), with the squeezing dome (3) being mobile in relation to the blades (40) and to the squeezing cone (5), spacing members (100) being arranged between the blades (40) and the squeezing cone (5), **characterised in that** the spacing members (100) have a section that increases starting from the blades (40) in the direction of the squeezing cone (5).

2. Citrus squeezer for squeezing a whole citrus according to claim 1, **characterised in that** each one of the blades (40) is associated with one of the spacing members (100).

3. Citrus squeezer for squeezing a whole citrus according to one of claims 1 or 2, **characterised in that** the spacing members (100) extend laterally on either side of the blades (40).

4. Citrus squeezer for squeezing a whole citrus according to one of claims 1 to 3, **characterised in that** the spacing members (100) are integral with the blades (40).

5. Citrus squeezer for squeezing a whole citrus according to one of claims 1 to 4, **characterised in that** the spacing members (100) and the blades (40) belong to a cutting unit (4) able to be displaced in relation to squeezing cone (5) along the axis (71).

6. Citrus squeezer for squeezing a whole citrus according to one of claims 1 to 5, **characterised in that** the squeezing cone (5) is driven into rotation.

7. Citrus squeezer for squeezing a whole citrus according to one of claims 1 to 6, **characterised in that** the squeezing dome (3) is mobile in translation along the axis (71).

8. Citrus squeezer for squeezing a whole citrus according to one of claims 1 to 7, **characterised in that** the squeezing cone (5) is arranged below the squeezing dome (3).
